(19) Europäisches Patentamt
European Patent Office
Office européen des brevets

(11) EP 3 357 339 B1

(12) # EUROPEAN PATENT SPECIFICATION

(45) Date of publication and mention of the grant of the patent:
**19.01.2022 Bulletin 2022/03**

(21) Application number: **16787484.1**

(22) Date of filing: **28.09.2016**

(51) International Patent Classification (IPC):
***A01N 65/10*** *(2009.01)* ***A01P 21/00*** *(2006.01)*

(52) Cooperative Patent Classification (CPC):
**A01N 65/10**

(86) International application number:
**PCT/ES2016/070677**

(87) International publication number:
**WO 2017/055659 (06.04.2017 Gazette 2017/14)**

(54) **USE OF A PLANT EXTRACT OBTAINED FROM ANISE AS POLLINATION INDUCER OF FLOWERS AND ITS APPLICATIONS IN AGRICULTURE**

VERWENDUNG EINES ANISPFLANZENEXTRAKTS ZUR BESTÄUBUNGSINDUKTION VON BLUMEN SOWIE DESSEN ANWENDUNG IN DER AGRARWIRTSCHAFT

UTILISATION D'UN EXTRAIT DES PLANTES OBTENU DE L'ANIS COMME INDUCTEUR DE LA POLLINISATION DES FLEURS ET SES APPLICATIONS DANS L'AGRICULTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2015 ES 201531382**

(43) Date of publication of application:
**08.08.2018 Bulletin 2018/32**

(73) Proprietor: **Biopharma Research S.A.**
**14540 La Rambla Cordoba (ES)**

(72) Inventor: **NIETO DEL RIO, Juan**
**14540 La Rambla (ES)**

(74) Representative: **Sahuquillo Huerta, Jesús**
**Jesana Patentes, SL**
**Jesana iP**
**C/ Huesca 5 ,Oficina 2**
**46001 Valencia (ES)**

(56) References cited:
**CN-A- 103 053 502 US-A1- 2015 257 345**

- **GORDON D. WALLER: "Attracting Honeybees to Alfalfa with Citral, Geraniol and Anise", JOURNAL OF APICULTURAL RESEARCH, vol. 9, no. 1, 24 January 1970 (1970-01-24), pages 9-12, XP055335279, GB ISSN: 0021-8839, DOI: 10.1080/00218839.1970.11100238**
- **MAYER D F ET AL.: "FIELD EVALUATION OF CHEMICAL POLLINATOR ATTRACTANTS ON TREE FRUITS.", AMERICAN BEE JOURNAL., vol. 122, no. 4, 1982, pages 287-289, XP009193051,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 357 339 B1

## Description

### Technical Field

The present invention relates to the use of a plant extract derived from anise which is used in agricultural formulations as pollination inducer of flowers, through the improvement of pollen quality and fertilization of the flowering plants. Biochemical activation produced by applying this extract allows extending the time for pollination and therefore, is possible to obtain higher rate of set and better filling of the fruit. All this leads to achieve more production, more homogeneous sizes and greater weight of the fruit.

### Background Art

Pollination is the process where the pollen grains are transported from the pollen sacs of the anther of a flower to the stigma of the same flower or another. This pollen transportation can occur because the grains are carried by the wind or by insects, mainly. Once the pollen grain has reached the stigma of the flower, the stigmatic liquid hydrates the grains and the pollen tube is developed. This pollen tube penetrates through the style in order to reach the ovule that will be fertilized.

One of the most influential factors in the pollination process is the so called "stigmatic receptivity", which is defined as the ability of a stigma to provide the pollen of a suitable environment for the germination of the grains and its penetration into the transmitter tissue (Losada and Herrero, 2009). This parameter is a decisive factor for the final fruit set and determines the "Effective Pollination Period", defined by Williams in 1966 (Sanzol et al., 2003; Sanzol and Herrero, 2001). The period during which the stigma is in the proper conditions for pollination is very short, between one or more days depending on the species. Some studies have concluded that the loss of stigmatic receptivity involves a degeneration of papillary cells, resulting in subsequent secretion of intracellular material to the outside (Gonzalez et al., 1995). However, factors that determine this fact are unknown.

With all this, it would be desirable to find a formulation that would improve the pollination process, either accelerating the transport of pollen from the anther to the stigma or keeping for a longer time this process to properly receive the pollen grains. The critical improvement of pollination would have a direct influence on the subsequent fruit set and consequently in crop production.

Anise oil is an essential oil obtained from the seeds of *Pimpinella anisum* L., an aromatic herb of the family Apiaceae native to southwest Asia and the eastern Mediterranean. Anise oil is obtained by a steam stripping of fresh or slightly dried seeds. The most important active ingredient of this extract is anethole, which represents percentages between 85 and 97% approximately of its composition. Furthermore, anise oil contains insignificant amounts of starch, sugars and proteins.

Anethole is an unsaturated aromatic ether, also called 1-methoxy-4-(1-propenyl) benzene, which has a chemical formula $C_{10}H_{12}O$ and the structure is shown in the figure below. This compound is responsible for the characteristic liquorice flavour which presents the anise extract.

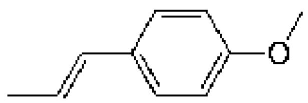

It has been demonstrated that the extract of *Pimpinella anisum* L. seeds has an antibiotic effect against pathogenic bacteria and fungi that affect both humans and animals. This essential oil has been used in traditional medicine since ancient times because of its carminative, antiseptic, stimulant and expectorant effects, among others.

Its effects against plant pathogenic microorganisms is a less studied field, although in recent years there have been some studies showing its antibacterial properties (Pino et al., 2012).

On the other hand, this extract is commonly used in agricultural formulation as insecticide and trap due to its attraction power to insects. CN103053502 discloses an anethole emitting device for improving the pollination activity of insects.

However, until now there are no references to the use of extracts of *Pimpinella anisum* L. seeds in agricultural formulations as a pollination inducer, in which the present invention is based.

### Summary of invention

The use of anise oil or anise extract as an inducer of flowers fertilization could be justified, in the first instance, due to the attractive effect that it would have on pollinating insects, thereby inducing pollen transport much faster from

the anthers to stigma. This advance in the arrival of pollen to the stigma would prevent pollen reached stigma when the loss of stigmatic receptivity is already happening. With all this, it would induce an improvement in the pollination of flowers.

In parallel, it has been observed that the application of agricultural formulations containing anise extract improves the pollination process in absence of pollinating insects. Although the mechanism of action is not clearly established, the justification for this fact would be found in a possible influence of such extract (and specifically due to the effect of anethole) over the organs involved in pollination, as it could be an improvement in the arrangement of stigma to be reached by the pollen, or an influence over the anthers, among other possible factors.

Preferably, the application of agricultural formulations containing the extract object of the present invention is carried out by foliar application after the occurrence of the flower bud.

Preferably, the application of anise extract is carried out during periods when low pollination rate is expected, such as periods with extreme environmental conditions (temperature, humidity, light...).

Furthermore, the application of the extract object of the present invention together with agricultural inputs that stimulate flowering in the pre-flowering time is proposed.

## Brief description of drawings

Below goes on to describe very briefly a series of drawings which aid in better understanding the invention and which are expressly related to an embodiment of said invention presented as a non-limiting example thereof.

Figure 1. Percentage of floral abortions in two areas with 100 plum tomato plants cultivated: untreated area and area treated by applying a formulation containing anise extract.

Figure 2. Percentage of floral abortions in two areas of 9 orange trees (navelina variety) cultivated: untreated area and area treated by applying a formulation containing anise extract.

Figure 3. Average number of beans per plant in two areas of broad bean cultivated: untreated area and area treated by applying a formulation containing anise extract.

Figure 4. Production (Kg/ha) in two areas of broad bean cultivated: untreated area and area treated by applying a formulation containing anise extract.

## Description of embodiments

In order to check the effectiveness of anise extract derived used in agricultural formulations as pollination inducer of flowers, four tests described below were carried out.

Test 1. Increase in flower setting

Tests for quantitatively measuring the increase in flower setting by the application of formulations containing the extract object of the present invention were performed. Measurements were made on crops of plum tomatoes and orange trees.

Crop: Plum tomatoes

A solution with a concentration of the anise extract at a dose of 0.5 mL/L was prepared, and then it was applied on a plum tomatoes crop by foliar application. Two separate areas with 50 plants each were delimited, applying the formulation in one of them and leaving the other area as control without treatment.

Flower setting was calculated based on the percentage of floral abortions in the two areas under study, by manual counting of such abortions. Figure 1 shows that the percentage of floral abortions in the control area was much higher than those corresponding to the area treated with the formulation containing anise extract. Results indicate an increase in the rate of flower setting from 19% in the application area compared to untreated control area.

Crop: Orange (naveline variety)

Previous experience was repeated, this time on a plantation with orange trees. A solution with a concentration of the extract at a dose of 0.5 mL/L was prepared, and then it was applied on an orange crop by foliar application. Two separate areas with 9 orange trees plants each were delimited, applying the formulation in one of them and leaving the other area as control without treatment.

Floral abortions in a branch of each fruit tree were counted, choosing those branches more similar by length, size and position within the tree. The results of the percentage of floral abortions in each zone are shown in Figure 2, and from this data, an increase of 5% in the rate of flower setting in the treated area was determined.

Test 2. Increase of specific weight of fruits.

Crop: Plum tomatoes

The specific weight was measured in tomato fruits from the two defined areas within the greenhouse: control area (without treatment) and area of application of the formulation. The specific weight was calculated for each fruit based on its mass (grams) and volume thereof, considering the corresponding formula to the volume of a prolate spheroid.

$$V = \frac{4}{3} \cdot \pi \cdot (equatorial\ diameter)^2 \cdot (polar\ diameter)$$

**Math. 1**

Results obtained in this assay are shown in Table 1. Through the use of the proposed application, results show an increase in specific weight of 14% for the case of plum tomatoes.

**Table 1**

| | Average weight of the fruit (g) | Equatorial diameter (mm) | Polar diameter (mm) | Specific weight (g/cc) |
|---|---|---|---|---|
| Control | 116 | 42.8 | 59.9 | 0.252 |
| Application | 137 | 43.2 | 60.8 | 0.288 |

Table 1. Average weight, equatorial and polar diameters, and specific weight of tomatoes from untreated plants (control) and plants treated with the formulation containing anise oil (application).

Crop: Orange (naveline variety)

The specific weight in fruits of oranges from the two delimited zones was measured similarly to the above example. Results obtained are shown in Table 2.

**Table 2**

| | Average weight of the fruit (g) | Equatorial diameter (mm) | Polar diameter (mm) | Specific weight (g/cc) |
|---|---|---|---|---|
| Control | 248 | 80.2 | 88.8 | 0.104 |
| Application | 289 | 82.1 | 90.1 | 0.114 |

Table 2. Average weight, equatorial and polar diameters, and specific weight of oranges from untreated trees (control) and trees treated with the formulation containing anise oil (application).

According to the values of equatorial diameter obtained in this test, oranges from control trees and trees treated with the formulation would be classified as size code 4 (equatorial diameter, 77-88 mm) according to the Standard Codex for orange (CODEX STAN 245-2004). However, although the size is the same, the specific weight was 10% higher for those oranges obtained from trees treated with the formulation.

Test 3. Increased production.

Crop: Plum tomatoes

Crop production was measured based on kg of produced fruit per plant, and a comparison with the production obtained from untreated control plants was done. Increasing production in the treated area was calculated using three formulas:
Increasing of net production:

$$Increase\ production\ 1\ (\%) = \frac{Kg/plant_{aplic} - Kg/plant_{test}}{Kg/plant_{test}} \cdot 100$$

**Math. 2**

Increased production taking account of increasing specific weight of the fruits:

$$Increase\ production\ 2\ (\%) = \frac{Kg/plant_{aplic} - (Kg/plant_{test} + 0.14 \cdot Kg/plant_{test})}{(Kg/plant_{test} + 0.14 \cdot Kg/plant_{test})} \cdot 100$$

**Math. 3**

Increased production taking account of increasing flower setting and increased specific weight of the fruits:

$$Increase\ production\ 3\ (\%) = \frac{Kg/plant_{aplic} - (Kg/plant_{test} + 0.19 \cdot Kg/plant_{test} + 0.14 \cdot Kg/plant_{test})}{(Kg/plant_{test} + 0.19 \cdot Kg/plant_{test} + 0.14 \cdot Kg/plant_{test})} \cdot 100$$

**Math. 4**

where:

$Kg/plant_{aplic}$ is average production obtained from tomato plant in the area treated with the application.
$Kg/plant_{test}$ is average production obtained from tomato plant in the control area.

Considering the results of average production in the control area (4.1 Kg) and treated plants (5.5 Kg), an increase in production according the three formulas described above has been found. Increasing up 34% according to formula 1, 18% according to the formula 2 and 1% considering the increase of the flower setting and increased specific weight. This is because more fruits were obtained with higher sizes.

Crop: Orange (naveline variety)

In orange crops, as in the case of tomato, increased production by the three formulas employed was found. In this case, coefficients of these formulas were corrected based on previous results in this particular crop, as it can be seen below.

Increasing of net production:

$$Increase\ production\ 1\ (\%) = \frac{Kg/plant_{aplic} - Kg/plant_{test}}{Kg/plant_{test}} \cdot 100$$

**Math. 5**

Increased production taking account of increasing specific weight of the fruits:

$$Increase\ production\ 2\ (\%) = \frac{Kg/plant_{aplic} - (Kg/plant_{test} + 0.10 \cdot Kg/plant_{test})}{(Kg/plant_{test} + 0.10 \cdot Kg/plant_{test})} \cdot 100$$

**Math. 6**

Increased production taking account of increasing flower setting and increased specific weight of the fruits:

$$Increase\ production\ 3\ (\%) = \frac{Kg/plant_{aplic} - (Kg/plant_{test} + 0.05 \cdot Kg/plant_{test} + 0.10 \cdot Kg/plant_{test})}{(Kg/plant_{test} + 0.05 \cdot Kg/plant_{test} + 0.10 \cdot Kg/plant_{test})} \cdot 100$$

**Math. 7**

where:

Kg/plant$_{aplic}$ is average production of oranges per tree in the area treated with the application.
Kg/plant$_{test}$ is average production of oranges per tree in the control area.

Production increases of 12% (according to the first formula), 2% (according to the second) and 1% (according to the third formula) were obtained. In this case, increased fruit size is more complicated and therefore a smaller increase in production has been obtained.

Test 4. Increased fruit setting and production of bean crop.

This test was carried out on a parcel of broad beans, in which two different test areas were differentiated. One of them was kept as a control area and the second parcel was used for the application of a formulation with anise extract at a dose of 0.5 mL/L by foliar application.

The study was aimed to determine the number of flowers and flower settings per plant as well as the final production of each area, for which a random sampling was done, analysing 10 plants in each of the two areas selected for the test.

Figure 3 shows the number of beans contained in each of the plants sampled for the two test areas. While in the control area the average number of beans per plant is 3.4, in the area where broad beans have been treated with the extract object of the present invention, the number of beans per plant was 6.5.

This result reconfirms that the application of anise oil increases flower setting of the crops, obtaining a greater number of fruits per plant.

Finally, the production of both marked areas was measured, obtaining the results shown in Figure 4.

Results show that the application of the anise extract object of the present invention has increased the number of flower settings, resulting in more beans by plants and an increase in production of 45%.

Citation list

Gonzalez, M.V.; Coque, M.; Herrero, M. 1995. Papillar integrity as an indicator of stigmatic receptivity in kiwifruit (Actinidia deliciosa). Journal of Experimental Botany. 46: 263-269.
Losada, J.M.; Herrero, M. Acta N° 54. Receptividad estigmática en el corimbo de manzano. VI Congreso Ibérico De Ciencias Hortícolas. XII Congreso Nacional De Ciencias Hortícolas 2009.
Pino, O.; Sanchez, Y.; Rojas, M.M.; Abreul, Y.; Correa, T.M. 2012. Composición química y actividad antibacteriana del aceite esencial de Pimpinella anisum L. Revista de Proteccion Vegetal. 27(3): 181-187.
Sanzol, J.; Herrero, M. 2001. The "effective pollination period" in fruit tres. Scientia Horticulturae. 90: 1-17.
Sanzol, J.; Rallo, P.; Herrero, M. 2003. Asynchronous development of stigmatic receptivity in the pear (Pyrus comunis; Rosaceae) flower. American Journal of Botany. 90(1): 78-84.

## Claims

1. Use of an extract of *Pimpinella anisum L.* seeds as a flower pollination inducer in absence of pollination insects

2. The use of an extract of *Pimpinella anisum L.* seeds according to claim 1 which comprises to apply such extract or an agricultural formulation containing this extract through foliar application after the appearance of the flower bud.

3. The use of an extract of *Pimpinella anisum L.* seeds according to claim 1 which comprises to apply such extract or an agricultural formulation containing this extract combined with agricultural compounds that stimulate the flowering process in the time prior to their start.

4. The use of the extract of any of the claims 1 to 3 for increasing the flower setting of plum tomatoes.

5. Use of the extract of any of the claims 1 to 3 for increase the flower setting of orange trees of the naveline variety.

6. Use of the extract of any of the claims 1 to 3 for increasing the weight of plum tomatoes.

7. Use of the extract of any of the claims 1 to 3 for increasing the weight of oranges of the naveline variety.

8. Use of the extract of any of the claims 1 to 3 for increasing the crop production of plum tomatoes.

9. Use of the extract of any of the claims 1 to 3 for increasing the crop production of oranges of the naveline variety.

10. Use of the extract of any of the claims 1 to 3 for increasing the fruit setting and production of bean crop.

## Patentansprüche

1. Verwendung eines Extrakts aus den Samen von *Pimpinella anisum L.* als Blütenbestäubungsinduktor in Abwesenheit von Bestäubungsinsekten

2. Verwendung eines Extrakts aus den Samen von *Pimpinella anisum L.* gemäß Anspruch 1, **dadurch gekennzeichnet, dass** ein solcher Extrakt oder eine landwirtschaftliche Formulierung, die diesen Extrakt enthält, nach dem Erscheinen der Blütenknospe über eine Blattapplikation ausgebracht wird.

3. Verwendung eines Extrakts aus den Samen von *Pimpinella anisum L.* gemäß Anspruch 1, **dadurch gekennzeichnet, dass** ein solcher Extrakt oder eine landwirtschaftliche Formulierung, die diesen Extrakt in Kombination mit landwirtschaftlichen Verbindungen enthält, die den Blühprozess stimulieren, in der Zeit vor dem Beginn der Blüte angewendet wird.

4. Verwendung des Extrakts nach einem der Ansprüche 1 bis 3 zur Steigerung des Blütenansatzes von Pflaumentomaten.

5. Verwendung des Extrakts nach einem der Ansprüche 1 bis 3 zur Steigerung des Blütenansatzes von Orangenbäumen der Sorte Naveline.

6. Verwendung des Extrakts nach einem der Ansprüche 1 bis 3 zur Erhöhung des Gewichts von Pflaumentomaten.

7. Verwendung des Extrakts nach einem der Ansprüche 1 bis 3 zur Erhöhung des Gewichts von Orangen der Sorte Naveline.

8. Verwendung des Extrakts nach einem der Ansprüche 1 bis 3 zur Steigerung der Ernteproduktion von Pflaumentomaten.

9. Verwendung des Extrakts nach einem der Ansprüche 1 bis 3 zur Steigerung der Ernteproduktion von Orangen der Sorte Naveline.

10. Verwendung des Extrakts nach einem der Ansprüche 1 bis 3 zur Steigerung des Fruchtansatzes und der Produktion von Bohnenpflanzen.

## Revendications

1. Utilisation d'un extrait de graines de *Pimpinella anisum L.* comme inducteur de la pollinisation des fleurs en l'absence d'insectes pollinisateurs.

2. Utilisation d'un extrait de graines de *Pimpinella anisum L.* selon la revendication 1 qui comprend l'application d'un tel extrait ou d'une formulation agricole contenant cet extrait par application foliaire après l'apparition du bouton floral.

3. Utilisation d'un extrait de graines de *Pimpinella anisum L.* selon la revendication 1 qui comprend l'application d'un tel extrait ou d'une formulation agricole contenant cet extrait combiné avec des composés agricoles qui stimulent le processus de floraison dans la période précédant leur début.

4. Utilisation de l'extrait de l'une quelconque des revendications 1 à 3 pour augmenter la floraison des tomates prunes.

5. Utilisation de l'extrait de l'une quelconque des revendications 1 à 3 pour augmenter la floraison des orangers de la variété naveline.

6. Utilisation de l'extrait de l'une quelconque des revendications 1 à 3 pour augmenter le poids des tomates prunes.

7. Utilisation de l'extrait de l'une quelconque des revendications 1 à 3 pour augmenter le poids des oranges de la variété naveline.

8. Utilisation de l'extrait de l'une quelconque des revendications 1 à 3 pour augmenter la production de tomates prunes.

9. Utilisation de l'extrait de l'une quelconque des revendications 1 à 3 pour augmenter la production végétale d'oranges de la variété naveline.

10. Utilisation de l'extrait de l'une quelconque des revendications 1 à 3 pour augmenter la nouaison et la production de la culture de haricots.

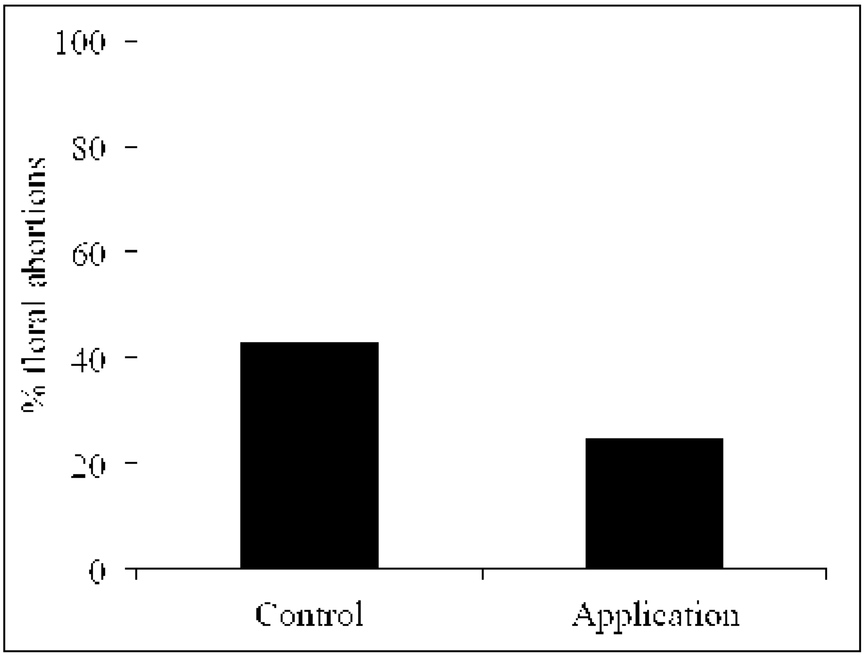


FIGURE 1

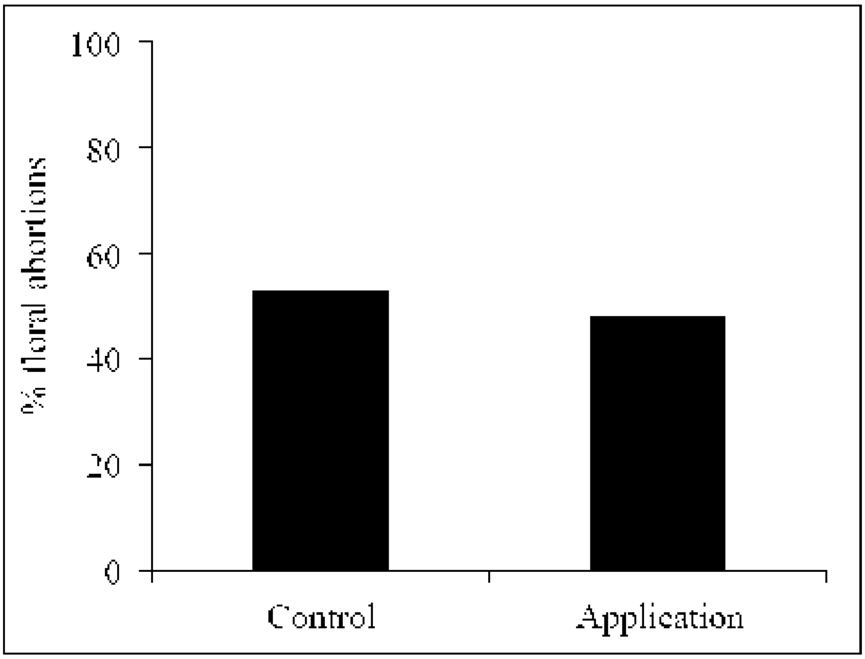


FIGURE 2

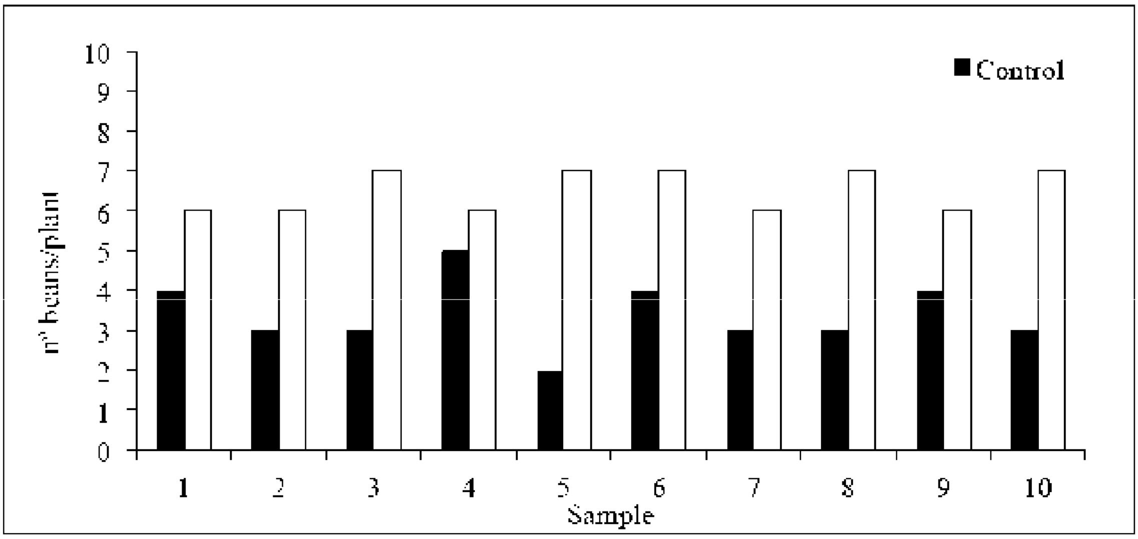


FIGURE 3

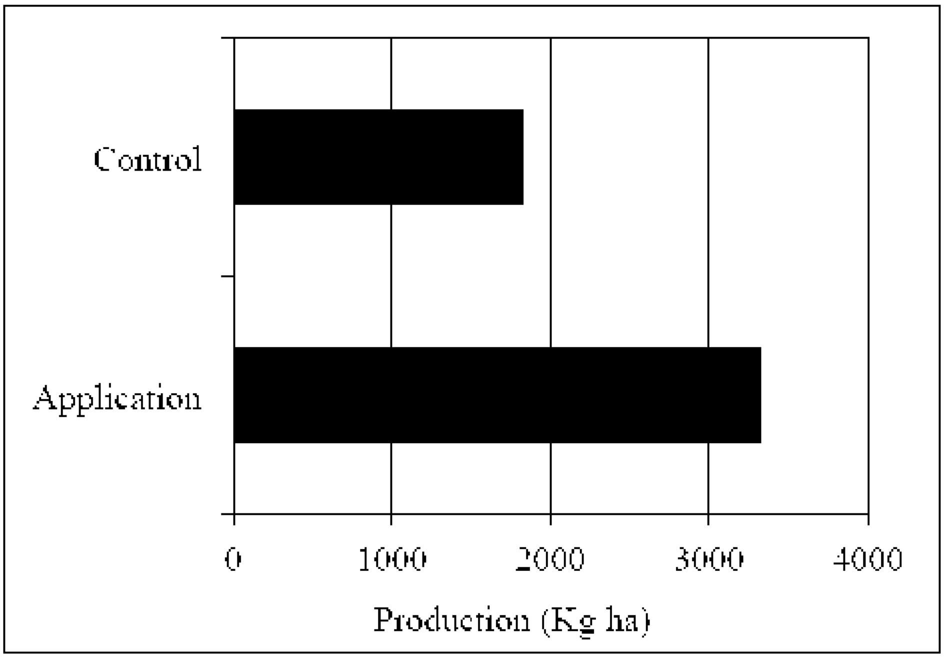


FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 103053502

### Non-patent literature cited in the description


- **GONZALEZ, M.V. ; COQUE, M. ; HERRERO, M.** Papillar integrity as an indicator of stigmatic receptivity in kiwifruit (Actinidia deliciosa). *Journal of Experimental Botany,* 1995, vol. 46, 263-269
- **LOSADA, J.M. ; HERRERO, M.** Receptividad estigmática en el corimbo de manzano. VI Congreso Ibérico De Ciencias Hortícolas. XII Congreso Nacional De Ciencias Hortícolas. *Acta,* 2009, (54
- **PINO, O. ; SANCHEZ, Y. ; ROJAS, M.M. ; ABREUL, Y. ; CORREA, T.M.** Composición química y actividad antibacteriana del aceite esencial de Pimpinella anisum L. *Revista de Proteccion Vegetal,* 2012, vol. 27 (3), 181-187
- **SANZOL, J. ; HERRERO, M.** The ''effective pollination period'' in fruit tres. *Scientia Horticulturae,* 2001, vol. 90, 1-17
- **SANZOL, J. ; RALLO, P. ; HERRERO, M.** Asynchronous development of stigmatic receptivity in the pear (Pyrus comunis; Rosaceae) flower. *American Journal of Botany,* 2003, vol. 90 (1), 78-84